(19) **Europäisches Patentamt / European Patent Office / Office européen des brevets**

(11) **EP 4 529 015 A1**

(12) **EUROPEAN PATENT APPLICATION**
published in accordance with Art. 153(4) EPC

(43) Date of publication:
26.03.2025 Bulletin 2025/13

(21) Application number: 23871060.2

(22) Date of filing: 28.09.2023

(51) International Patent Classification (IPC):
*H02M 7/487* (2007.01)

(52) Cooperative Patent Classification (CPC):
H02M 7/487; H02M 7/5387; H02M 7/5395

(86) International application number:
PCT/CN2023/122773

(87) International publication number:
WO 2024/067836 (04.04.2024 Gazette 2024/14)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 30.09.2022 CN 202211216528

(71) Applicant: Shanghai Chint Power Systems Co., Ltd.
Shanghai 201620 (CN)

(72) Inventors:
• ZHANG, Xin
Shanghai 201614 (CN)
• ZHOU, Xu
Shanghai 201614 (CN)
• CHEN, Ying
Shanghai 201614 (CN)
• ZHANG, Yulin
Shanghai 201614 (CN)
• GUO, Bin
Shanghai 201614 (CN)
• YIN, Yeping
Shanghai 201614 (CN)
• YANG, Bo
Shanghai 201614 (CN)

(74) Representative: Petraz, Gilberto Luigi et al
GLP S.r.l.
Viale Europa Unita, 171
33100 Udine (IT)

(54) **VOLTAGE REGULATION METHOD FOR THREE-PHASE FOUR-BRIDGE-ARM THREE-LEVEL INVERTER**

(57) The present invention provides a voltage regulation method for a three-phase four-bridge-arm three-level inverter. The method includes: determining a voltage vector corresponding to a three-phase voltage; constructing a controllable spatial polyhedral region on the basis of an abc three-dimensional coordinate system and the voltage vector; positioning preset reference vectors in a plurality of sub-regions of the controllable spatial polyhedral region, so as to generate reference voltage vectors corresponding to the reference vectors, wherein the reference voltage vectors are used for controlling output states of corresponding four bridge arms; sorting the reference voltage vectors with a modulation strategy in which a zero-level output state is reduced; and generating a switching pulse sequence of the bridge arms according to the sorted reference voltage vectors and a corresponding action time, so as to regulate a midpoint voltage of the three-phase four-bridge-arm three-level inverter. In this way, the midpoint voltage of the inverter can be balanced.

FIG. 2

**Description**

## TECHNICAL FIELD

The present application relates to the field of electronic technologies, in particular to a voltage regulation method for a three-phase four-bridge-arm three-level inverter.

## BACKGROUND

With the development of electronic technologies, multi-level inverters have received a lot of attention in the occasions of medium and high voltage power, and different circuit topologies and inverter control methods have been proposed. The multi-level inverters have gradually entered the practical stage, and are especially relatively large in demand in the market of China. With people's more and more strong awareness of power saving and market interests, China's potential market demands will be transformed into actual market demands, so that medium-voltage high-power inverter products have broad market prospects.

There have always been problems during the control process of the multi-level inverter: a midpoint balance problem of a DC-side capacitor; and a capacitor voltage imbalance problem caused by unbalanced charge and discharge of a DC divider capacitor in a diode clamp type because of the topology of the multi-level inverter. The reason for the change in the midpoint capacitor voltage is mainly affected by a current flowing into the midpoint of each phase. The midpoint capacitor voltage imbalance will cause DC bias or waveform deformity in an outputted load voltage waveform, so the midpoint balance problem must be solved.

## SUMMARY

An embodiment of the present application provides a voltage regulation method for a three-phase four-bridge-arm three-level inverter, which is used for improving/solving the problem of midpoint voltage imbalance in a multi-level inverter in related technologies.

The present application provides a voltage regulation method for a three-phase four-bridge-arm three-level inverter, comprising: determining a voltage vector corresponding to a three-phase voltage; constructing a controllable spatial polyhedral region on the basis of an abc three-dimensional coordinate system and the voltage vector; positioning preset reference vectors in a plurality of sub-regions of the controllable spatial polyhedral region, so as to generate reference voltage vectors corresponding to the reference vectors, wherein the reference voltage vectors are used for controlling output states of corresponding four bridge arms; sorting the reference voltage vectors with a modulation strategy in which a zero-level output state is reduced; and generating a switching pulse sequence of the bridge arms according to the sorted reference voltage vectors and a corresponding action time, so as to regulate a midpoint voltage of the three-phase four-bridge-arm three-level inverter.

In some embodiments, the determining a voltage vector corresponding to a three-phase voltage comprises: determining the voltage vector corresponding to the three-phase voltage according to output states of the bridge arms, the output states comprising a high level, a zero level and a low level.

In some embodiments, the determining the voltage vector corresponding to the three-phase voltage according to output states of the bridge arms comprises: determining the voltage vector corresponding to the three-phase voltage according to the following formula:

$$\begin{cases} U_{AN} = \frac{S_a - S_n}{2} U_{dc} \\ U_{BN} = \frac{S_b - S_n}{2} U_{dc}; \\ U_{CN} = \frac{S_c - S_n}{2} U_{dc} \end{cases}$$

in which: $U_{AN}$ represents a voltage vector of an A bridge arm relative to an N bridge arm; $U_{BN}$ represents a voltage vector of a B bridge arm relative to the N bridge arm; $U_{CN}$ represents a voltage vector of a C bridge arm relative to the N bridge arm; high level = 1 $S_{i(i=a, b, c, n)}$ = zero level = 0, $S_a$, $S_b$, $S_c$ and $S_n$ are output states of A, B, C low level = -1 and N bridge arms of the three-phase four-bridge-arm three-level inverter respectively; and $U_{dc}$ represents a DC-side power voltage.

In some embodiments, the constructing a controllable spatial polyhedral region on the basis of an abc three-dimensional coordinate system and the voltage vector comprises: standardizing the voltage vectors; and introducing the standardized voltage vectors into the abc three-dimensional coordinate system to construct the controllable spatial polyhedral region.

In some embodiments, the standardizing the voltage vectors comprises: standardizing the voltage vectors according to the following formula:

$$\begin{cases} U_{AN}^* = (\frac{S_a - S_n}{2} U_{dc}) \frac{2}{U_{dc}} = S_a - S_n \\ U_{BN}^* = (\frac{S_b - S_n}{2} U_{dc}) \frac{2}{U_{dc}} = S_b - S_n; \\ U_{CN}^* = (\frac{S_c - S_n}{2} U_{dc}) \frac{2}{U_{dc}} = S_c - S_n \end{cases}$$

$U_{AN}^*$ represents a standardized voltage vector of the A bridge arm relative to the N bridge arm; $U_{BN}^*$ represents a standardized voltage vector of the B bridge arm relative to the N bridge arm; and $U_{CN}^*$ represents a standardized voltage vector of the C bridge arm relative to the N bridge arm

In some embodiments, the controllable spatial polyhedral region is a controllable dodecahedral region, the controllable dodecahedral region comprising three cubic regions constructed by standardized voltage vectors and six imagery cubic regions attached to the outer sides of the three cubic regions.

In some embodiments, the positioning preset reference vectors in a plurality of sub-regions of the controllable spatial polyhedral region, so as to generate reference voltage vectors corresponding to the reference vectors comprises: positioning the preset reference vectors in the cubic regions of the plurality of sub-regions of the controllable spatial polyhedral region; positioning the preset reference vectors in tetrahedral regions of the plurality of sub-regions of the controllable spatial polyhedral region; and generating reference voltage vectors corresponding to the reference vectors according to a final positioning result.

In some embodiments, the positioning the preset reference vectors in the cubic regions of the plurality of sub-regions of the controllable spatial polyhedral region comprises: selecting a cube where reference origin coordinates are located from the controllable spatial polyhedral region based on the reference origin coordinates after rounding of the reference vectors, wherein the reference origin coordinates are:

$$\begin{cases} a = \text{integer}(u_{ran}^*) \\ b = \text{integer}(u_{rbn}^*); \\ c = \text{integer}(u_{rcn}^*) \end{cases}$$

in which: $u_{ran}^*$ represents a-axis coordinates of the reference vector; $u_{rbn}^*$ represents b-axis coordinates of the reference vector; and $u_{rcn}^*$ represents c-axis coordinates of the reference vector.

In some embodiments, the positioning the preset reference vectors in the tetrahedral regions of the plurality of sub-regions of the controllable spatial polyhedral region comprises: a positioned target cube is divided by three 45° sections by taking origin coordinates corresponding to the reference vectors as a reference point; distances among the three sections are calculated with the reference origin coordinates as a center to determine a tetrahedron position where the reference vector is located; and the three 45° sections comprise an a-b-axis 45° section, a c-b-axis 45° section and an a-c-axis 45° section that pass through an origin.

In some embodiments, the sorting the reference voltage vectors with a modulation strategy in which a zero-level output state is reduced comprises: determining a synthesis sequence of the reference voltage vectors in the controllable spatial polyhedral region; and adjusting a sequence of the reference voltage vectors with a goal of reducing a midpoint current into each bridge arm.

In some embodiments, the generating a switching pulse sequence of the bridge arms according to the sorted reference voltage vectors and a corresponding action time comprises: determining a duty ratio corresponding to the reference voltage vectors according to the following formula:

$$\begin{cases} u_{ran}^* = S_{an}^1 d_1 + S_{an}^2 d_2 + S_{an}^3 d_3 + S_{an}^4 d_4 \\ u_{rbn}^* = S_{bn}^1 d_1 + S_{bn}^2 d_2 + S_{bn}^3 d_3 + S_{bn}^4 d_4 \\ u_{rcn}^* = S_{cn}^1 d_1 + S_{cn}^2 d_2 + S_{cn}^3 d_3 + S_{cn}^4 d_4 \\ d_1 + d_2 + d_3 + d_4 = 1 \end{cases}$$

multiplying the duty ratio by a switching period to obtain the action time corresponding to the reference voltage vectors; in which, $(S_{an}^1, S_{bn}^1, S_{cn}^1)$, $(S_{an}^2, S_{bn}^2, S_{cn}^2)$, $(S_{an}^3, S_{bn}^3, S_{cn}^3)$ and $(S_{an}^4, S_{bn}^4, S_{cn}^4)$ are tetrahedral fixed-point coordinates where the reference voltage vectors are located, Ts is a switching period and d1-4 are the duty ratios of the reference voltage vectors; and generating the switching pulse sequence of the bridge arms according to the sorted reference voltage vectors and the corresponding action time.

In some embodiments, the generating a switching pulse sequence of the bridge arms according to the sorted reference voltage vectors and a corresponding action time comprises: sorting the action time of the reference voltage vectors according to an arrangement mode of the sorted reference voltage vectors; allocating the sorted action time in nine segments, the nine-segment allocation being as follows: a first segment, a fifth segment and a ninth segment in nine-segment vectors are allocated in the same time period, the first segment and the ninth segment respectively occupy 1/4, the fifth segment occupies 1/2, and the remaining six segments each occupy 1/2 of the corresponding time period according to symmetry; and determining states of four bridge arms according to the voltage vectors, and allocating corresponding four switching states for each state to form a pulse sequence.

The voltage regulation method for the three-phase four-bridge-arm three-level inverter provided by the embodiment of the present application includes: determining a voltage vector corresponding to a three-phase voltage; constructing a controllable spatial polyhedral region on the basis of an abc three-dimensional coordinate system and the voltage vector; positioning preset reference vectors in a plurality of sub-regions of the controllable spatial polyhedral region, so as to generate reference voltage vectors corresponding to the reference vectors, wherein the reference voltage vectors are used for controlling output states of corresponding four bridge arms; sorting the reference voltage vectors with a modulation strategy in which a zero-level output state is reduced; and generating a switching pulse sequence of the bridge arms according to the sorted reference voltage vectors and a corresponding action time, so as to regulate a midpoint voltage of the three-phase four-bridge-arm three-level inverter. In this way, the present embodiment has the following beneficial effects.

(1) Under the condition of not adding a controller, the balance adjustment of a midpoint voltage of the three-phase four-bridge-arm three-level inverter is realized.

(2) Six imaginary cubes are introduced to ensure that redundant controllable regions of the traditional SVPWM modulation method are reduced while ensuring the position determination of the reference vectors, which simplifies the complexity of the traditional SVPWM modulation method.

(3) A modulation strategy is adopted: with the goal of reducing the midpoint current into each bridge arm, the sequences of the original reference voltage vectors are changed, so as to counteract a zero-level output state that affects the midpoint voltage balance.

## BRIEF DESCRIPTION OF THE DRAWINGS

To describe the technical solutions in the embodiments of the present application more clearly, the following briefly introduces the accompanying drawings required for describing the embodiments. Apparently, the accompanying drawings in the following description show merely some embodiments of the present application, and a person of ordinary skill in the art may still derive other drawings from these accompanying drawings without creative efforts.

FIG. 1 is a schematic structural diagram of a voltage regulation method for a three-phase four-bridge-arm three-level inverter provided by the present application;

FIG. 2 is a schematic flowchart of an embodiment of the voltage regulation method for the three-phase four-bridge-arm three-level inverter provided by the present application;

FIG. 3 is a schematic flowchart of step 22 in an embodiment;

FIG. 4 is a schematic diagram of a controllable spatial polyhedral region provided by the present application;

FIG. 5 is a schematic flowchart of step 23 in an embodiment;

FIG. 6 is a schematic flowchart of cube positioning provided by the present application;

FIG. 7 is a schematic flowchart of tetrahedron positioning provided by the present application;

FIG. 8 is a schematic flowchart of step 25 in an embodiment;

FIG. 9 is a schematic diagram of a nine-segment time allocation method provided by the present application;

FIG. 10 is a midpoint location diagram under a balanced load condition provided by the present application; and

FIG. 11 is a midpoint location diagram under an actual load condition after balance with a voltage regulation method provided by the present application.

## DETAILED DESCRIPTION OF THE INVENTION

The technical solutions in the embodiments of the present application will be illustrated clearly and completely hereinafter with reference to the accompanying drawings in the embodiments of the present application. Apparently, the embodiments described are merely some but not all of the embodiments of the present application. Based on the embodiments of the present application, all other embodiments obtained by those of ordinary skills in the art without going through any creative work should fall within the scope of protection of the present application.

In the description of the present invention, it shall be understood that the orientation or position relationship indicated by the terms "center", "longitudinal", "transverse", "length", "width", "thickness", "up", "down", "front", "rear", "left", "right", "vertical", "horizontal", "top", "bottom", "inside", "outside", "clockwise", "anticlockwise", and the like is based on the orientation or position relationship shown in the accompanying drawings, it is only for the convenience of description of the present invention and simplification of the description, and it is not to indicate or imply that the indicated device or element must have a specific orientation, and be constructed and operated in a specific orientation. Therefore, the terms shall not be understood as limiting the present invention. Moreover, the terms "first" and "second" are used for descriptive purposes only and cannot be understood as indicating or implying relative importance, or implicitly indicating the number of technical features indicated thereby. Therefore, the feature defined by "first" and "second" may explicitly or implicitly include one or more of the features. In the description of the present invention, the meaning of "multiple" is two or more than two, unless otherwise specifically defined.

"A and/or B" includes the following three combinations: A alone, B alone, and a combination of A and B.

The use of "apply to" or "configured to" in the present application means an open and inclusive language that does not exclude devices that apply to or are configured to perform additional tasks or steps. In addition, the use of "based on" means an open and inclusive sense, because a process, step, calculation, or other action based on one or more of the conditions or values may in practice be based on other conditions or exceed the stated values.

In the present application, the term "exemplary" is used to represent "examples, illustrations, or descriptions". Any embodiment described in the present invention as "exemplarily" should not be construed as preferred or advantageous over other embodiments. In order to enable any person skilled in the art to realize and use the present application, the following description is given. In the following description, details are listed for the purpose of interpretation. It should be understood that a person of ordinary skill in the art can recognize that the present application can be realized without the use of these specific details. In other cases, the well-known structures and processes will not be elaborated in order to avoid obscuring the description of the application caused by unnecessary details. Accordingly, the present application will not be limited to these embodiments shown herein, but will conform to the widest range consistent with the principles and features disclosed in the present application.

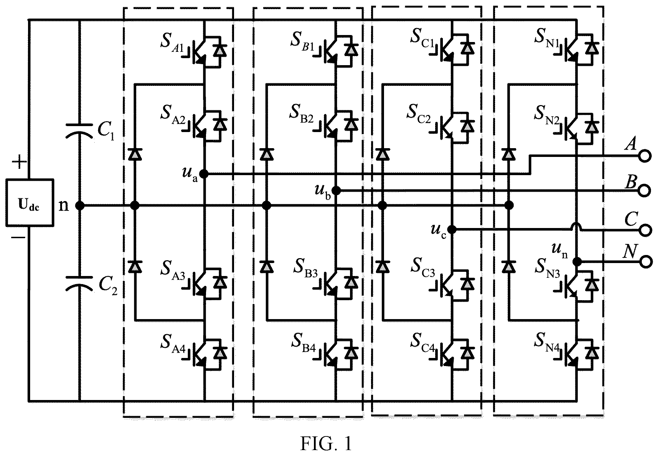

As shown in FIG. 1, FIG. 1 is a schematic structural diagram of a three-phase four-bridge-arm three-level inverter. A topological structure of the three-phase four-arm three-level inverter includes a DC-side voltage source $U_{dc}$, from left to right, which are an A bridge arm, a B bridge arm, a C bridge arm and an N bridge arm respectively. Each bridge arm consists of four switches (e.g., IGBTs) and two diodes. An output point of each bridge arm is ux (x=a,b,c,n). A diode midpoint of each bridge arm is connected to a midpoint n of a split capacitor. A voltage of the midpoint n of the split capacitor needs to be regulated in the embodiment of the present application.

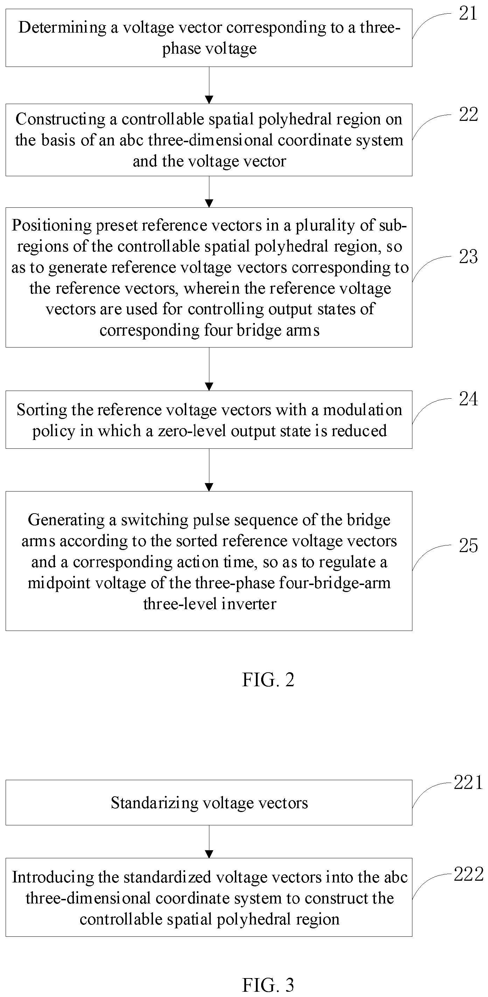

Referring to FIG. 2, FIG. 2 is a schematic flowchart of an embodiment of the voltage regulation method for the three-phase four-bridge-arm three-level inverter provided by the present application. The method includes the following steps 21-25.

In step 21: a voltage vector corresponding to a three-phase voltage is determined.

Optionally, in one embodiment, the voltage vector corresponding to the three-phase voltage is determined according to output states of the bridge arms, the output states including a high level, a zero level and a low level.

First, Sa, Sb, Sc and Sn are respectively defined as output states of the A, B, C and N bridge arms of the three-phase four-arm three-level inverter:

$$S_{i(i=a,\ b,\ c,\ n)} = \begin{cases} \text{high level} = 1 \\ \text{zero level} = 0 \\ \text{low level} = -1 \end{cases};$$

and then, the voltage vector corresponding to the three-phase voltage is:

$$\begin{cases} U_{AN} = \frac{S_a - S_n}{2} U_{dc} \\ U_{BN} = \frac{S_b - S_n}{2} U_{dc}; \\ U_{CN} = \frac{S_c - S_n}{2} U_{dc} \end{cases}$$

in which: $U_{AN}$ represents a voltage vector of the A bridge arm relative to the N bridge arm; $U_{BN}$ represents a voltage vector of the B bridge arm relative to the N bridge arm; $U_{CN}$ represents a voltage vector of the C bridge arm relative to the N bridge arm; $S_a$, $S_b$, $S_c$ and $S_n$ are output states of A, B, C and N bridge arms of the three-phase four-bridge-arm three-level inverter respectively; and $U_{dc}$ represents a DC-side power voltage.

In step 22: a controllable spatial polyhedral region is constructed on the basis of an abc three-dimensional coordinate system and the voltage vector.

Optionally, in one embodiment, the controllable spatial polyhedral region includes a plurality of cubic subregions and a plurality of tetrahedral subregions.

Optionally, as shown in FIG. 3, FIG. 3 is a schematic flowchart of the step 22 in one embodiment. This step 22 may include the following steps 221-222.

In step 221: the voltage vectors are standardized.

Specifically, the voltage vectors are standardized according to the following formula:

$$\begin{cases} U^*_{AN} = (\frac{S_a - S_n}{2} U_{dc}) \frac{2}{U_{dc}} = S_a - S_n \\ U^*_{BN} = (\frac{S_b - S_n}{2} U_{dc}) \frac{2}{U_{dc}} = S_b - S_n; \\ U^*_{CN} = (\frac{S_c - S_n}{2} U_{dc}) \frac{2}{U_{dc}} = S_c - S_n \end{cases}$$

$U^*_{AN}$ represents a standardized voltage vector of the A bridge arm relative to the N bridge arm; $U^*_{BN}$ represents a standardized voltage vector of the B bridge arm relative to the N bridge arm; and $U^*_{CN}$ represents a standardized voltage vector of the C bridge arm relative to the N bridge arm.

In step 222: the standardized voltage vectors are introduced into the abc three-dimensional coordinate system to construct the controllable spatial polyhedral region.

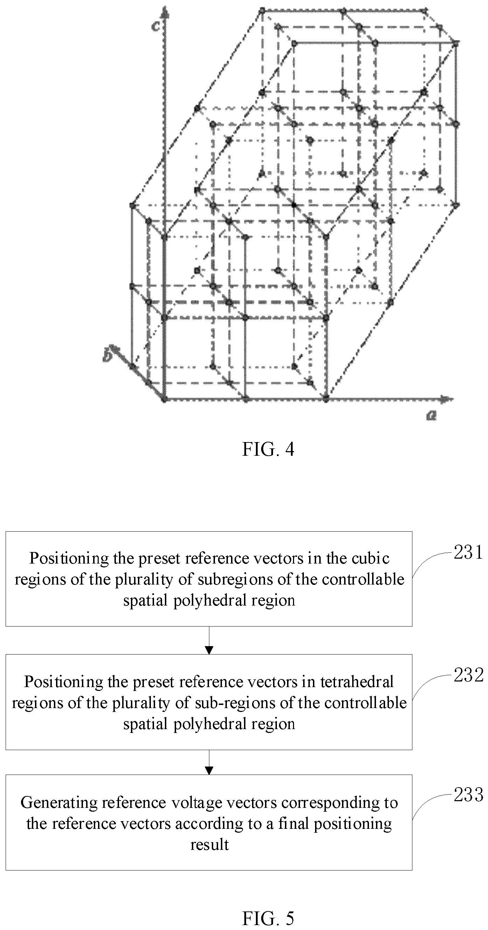

As shown in FIG. 4, FIG. 4 is a schematic diagram of the controllable spatial polyhedral region provided by the present application. After the voltage vectors are standardized, the standardized voltage vectors are introduced into the abc three-dimensional coordinate system to construct a controllable dodecahedral region.

In one embodiment, the controllable spatial polyhedral region includes three large cubes and six imaginary cubes. Each imaginary cube is a control region within a modulation ratio range of 0.866 to 1, and the controllable region is translated to a forward direction of the abc coordinate system, which is convenient for unified analysis and calculation.

In step 23: preset reference vectors are positioned in a plurality of subregions of the controllable spatial polyhedral region, so as to generate reference voltage vectors corresponding to the reference vectors, wherein the reference voltage vectors are used for controlling output states of corresponding four bridge arms.

In one embodiment, as shown in FIG. 5, FIG. 5 is a schematic flowchart of the step 23 in one embodiment. This step 23 may include the following steps 231-233.

In step 231: the preset reference vectors are positioned in the cubic regions of the plurality of subregions of the controllable spatial polyhedral region.

A cube where reference origin coordinates are located are located is selected from the controllable spatial polyhedral region based on the reference origin coordinates after rounding of the reference vectors, wherein

the reference origin coordinates are:

$$\begin{cases} a = \text{integer}(u^*_{ran}) \\ b = \text{integer}(u^*_{rbn}); \\ c = \text{integer}(u^*_{rcn}) \end{cases}$$

in which: $u^*_{ran}$ represents a-axis coordinates of the reference vector; $u^*_{rbn}$ represents b-axis coordinates of the reference vector; and $u^*_{rcn}$ represents c-axis coordinates of the references vector.

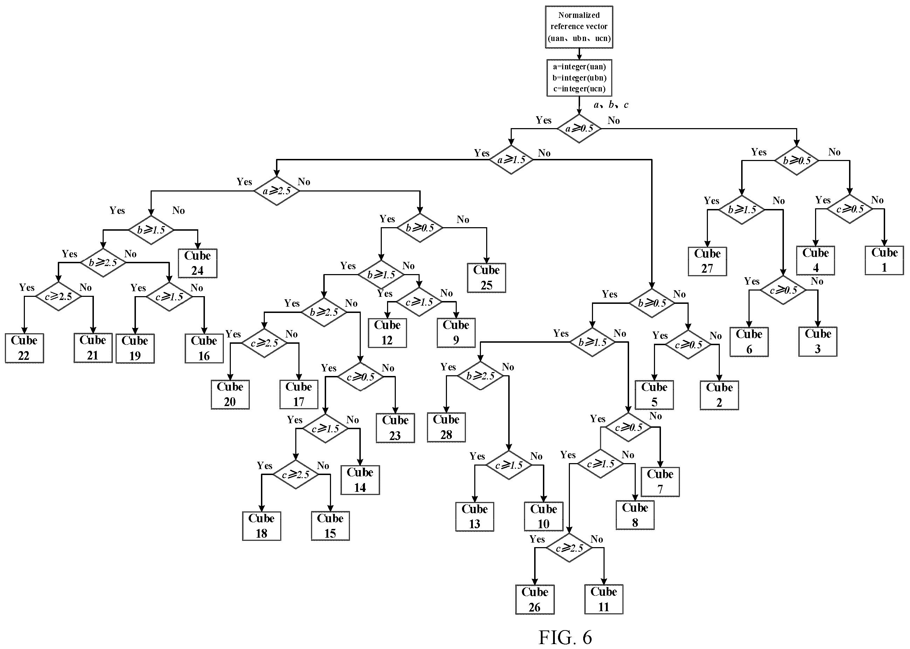

Referring to FIG. 6 for details, FIG. 6 is a schematic flowchart of cube positioning provided by the present application.

In a specific embodiment, reference origin coordinate points (a, b, c) are calculated by using the above formula, and then a logical sequence in FIG. 6 is used to determine:

if a<0.5, b<0.5, c<0.5, the selected cube is cube1;
if a<0.5, b<0.5, c≥0.5, the selected cube is cube4;
if a<0.5, 0.5<b<0.5, c<0.5, the selected cube is cube3.
if a<0.5, 0.5≤b<1.5, c<0.5, the selected cube is cube3;
if a<0.5, 0.5≤b<1.5, c≥0.5, the selected cube is cube6;
if a<0.5, b≥1.5, the selected cube is cube27;
if 0.5≤a< 1.5, b<0.5, c<0.5, the selected cube is cube2;
if 0.5≤a< 1.5, b<0.5, c≥0.5, the selected cube is cube5;
if 0.5≤a< 1.5, 0.5≤b< 1.5, c<0.5, the selected cube is cube7;
if 0.5≤a< 1.5, 0.5≤b<1.5, 0.5≤c<1.5, the selected cube is cube8;
if 0.5≤a<1.5, 0.5≤b<1.5, 1.5≤c<2.5, the selected cube is cube11;
if 0.5≤a< 1.5, 0.5≤b<1.5, c≥2.5, the selected cube is cube26;
if 0.5≤a< 1.5, 1.5≤b<2.5, c< 1.5, the selected cube is cube10;
if 0.5≤a< 1.5, 1.5≤b<2.5, c≥1.5, the selected cube is cube13;
if 0.5≤a< 1.5, b≥2.5, the selected cube is cube28;
if 1.5≤a<2.5, b<0.5, the selected cube is cube25;
if 1.5≤a<2.5, 0.5≤b<1.5, c< 1.5, the selected cube is cube9;
if 1.5≤a<2.5, 0.5≤b<1.5, c≥1.5, the selected cube is cube12;
if 1.5≤a<2.5, 1.5≤b<2.5, c<0.5, the selected cube is cube23;
if 1.5≤a<2.5, 1.5≤b<2.5, 0.5≤c< 1.5, the selected cube is cube14;
if 1.5≤a<2.5, 1.5≤b<2.5, 1.5<,c<2.5, the selected cube is cube15;
if 1.5≤a<2.5, 1.5≤b<2.5, c≥2.5, the selected cube is cube18;
if 1.5≤a<2.5, b≥2.5, c<2.5, the selected cube is cube17;
if 1.5≤a<2.5, b≥2.5, c≥2.5, the selected cube is cube20;
if a≥2.5, b< 1.5, the selected cube is cube24;
if a≥2.5, 1.5≤b<2.5, c< 1.5, the selected cube is cube16;
if a≥2.5, 1.5≤b<2.5, c≥1.5, the selected cube is cube19;
if a≥2.5, b≥2.5, c<2.5, the selected cube is cube21; and
if a≥2.5, b≥2.5, c≥2.5, the selected cube is cube22.

In step 232: the preset reference vectors are positioned in tetrahedral regions of the plurality of sub-regions of the controllable spatial polyhedral region.

The positioned target cube is divided by three 45° sections by taking origin coordinates corresponding to the reference vectors as a reference point; distances among the three sections are calculated with the reference origin coordinates as a center to determine a tetrahedron position where the reference vector is located; and the three 45° sections comprise an a-b-axis 45° section, a c-b-axis 45° section and an a-c-axis 45° section that pass through an origin.

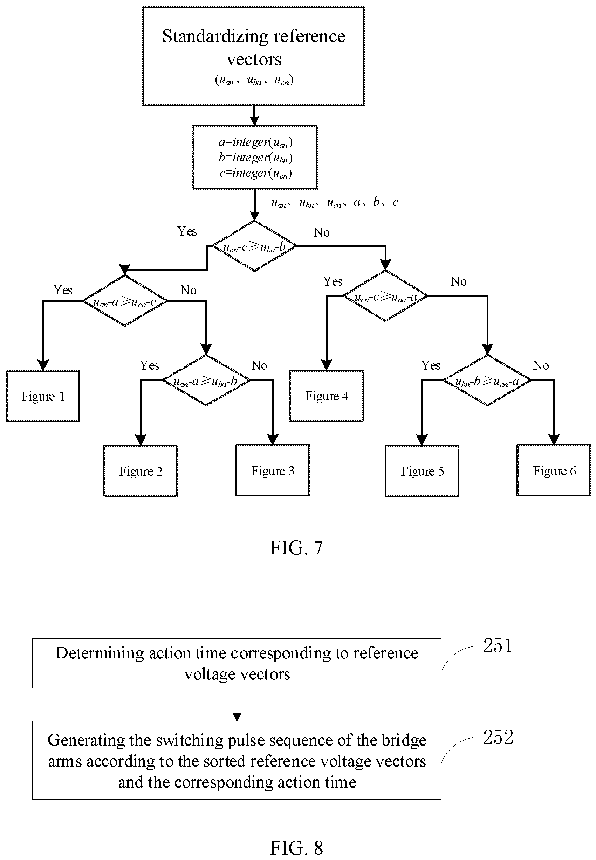

Referring to FIG. 7 for details, FIG. 7 is a schematic flowchart of tetrahedron positioning provided by the present application.

In a specific embodiment, reference origin coordinate points (a, b, c) and reference vectors ($u_{an}$, $u_{bn}$, $u_{cn}$) are calculated by using the above formula, and then a logical sequence in FIG. 7 is used to determine:

$u_{cn}$-c≥$u_{bn}$-b, $u_{an}$-a≥$u_{cn}$-c, the selected tetrahedron is tetrahedron 1;
$u_{cn}$-c≥$u_{bn}$-b, $u_{an}$-a<$u_{cn}$-c, $u_{an}$-a≥$u_{bn}$-b, the selected tetrahedron is tetrahedron 2;
$u_{cn}$-c≥$u_{bn}$-b, $u_{an}$-a <$U_{cn}$-C, $u_{an}$-a <$u_{bn}$-b, the selected tetrahedron is tetrahedron 3;
$u_{cn}$-c<$u_{bn}$-b, $U_{cn}$-c<$u_{an}$-a, the selected tetrahedron is tetrahedron 4;
$u_{cn}$-c<$u_{bn}$-b, $u_{cn}$-c<$u_{an}$-a, $u_{bn}$-b≥$u_{an}$-a, the selected tetrahedron is tetrahedron 5; and
$u_{cn}$-c<$u_{bn}$-b, $u_{cn}$-c<$u_{an}$-a, $u_{bn}$-b<$u_{an}$-a, the selected tetrahedron is tetrahedron 6.

In step 233: reference voltage vectors corresponding to the reference vectors are generated according to a final positioning result.

In step 24: the reference voltage vectors are sorted with a modulation strategy in which a zero-level output state is reduced.

The step 24 may specifically include: determining a synthesis sequence of the reference voltage vectors in the controllable spatial polyhedral region; and adjusting a sequence of the reference voltage vectors with the goal of reducing the midpoint current into each bridge arm.

Since of all the voltage vectors, only a zero-level state (e.g., a O state) can affect the midpoint voltage, in order to minimize the effect of the O state, a new arrangement method of the reference voltage vectors can be used to counteract this effect. The new vector arrangement method is as follows (four reference voltage vectors for a tetrahedron are V1-V4):

a sequence of reference voltage vectors for a tetrahedron in each of cubes 1-11 is: V4, V3, V2, V1;
a sequence of reference voltage vectors in each of cubes 12-22 is: V1, V2, V3, V4;
a sequence of reference voltage vectors for a tetrahedron in each of imagery cubes 23, 25 and 27 is: V2, V3, V4, V1; and
a sequence of reference voltage vectors for a tetrahedron in each of imagery cubes 24, 26 and 28 is: V3, V2, V1, V4.

In step 25: a switching pulse sequence of the bridge arms is generated according to the sorted reference voltage vectors and a corresponding action time, so as to regulate the midpoint voltage of the three-phase four-bridge-arm three-level inverter.

As shown in FIG. 8, FIG. 8 is a schematic flowchart of the step 25 in one embodiment. This step 25 may include the following steps 251 to 252.

In step 251: an action time corresponding to the reference voltage vectors is determined.

A duty ratio corresponding to the reference voltage vectors is determined according to the following formula:

$$\begin{cases} u_{ran}^* = \breve{S}_{an}^1 d_1 + S_{an}^2 d_2 + S_{an}^3 d_3 + S_{an}^4 d_4 \\ u_{rbn}^* = S_{bn}^1 d_1 + S_{bn}^2 d_2 + S_{bn}^3 d_3 + S_{bn}^4 d_4 \\ u_{rcn}^* = S_{cn}^1 d_1 + S_{cn}^2 d_2 + S_{cn}^3 d_3 + S_{cn}^4 d_4 \\ d_1 + d_2 + d_3 + d_4 = 1 \end{cases},$$

the action time corresponding to the reference voltage vectors being obtained by multiplying the duty ratio by a switching period Ts,

in which, $(S_{an}^1, S_{bn}^1, S_{cn}^1)$, $(S_{an}^2, S_{bn}^2, S_{cn}^2)$, $(S_{an}^3, S_{bn}^3, S_{cn}^3)$ and $(S_{an}^4, S_{bn}^4, S_{cn}^4)$ are tetrahedron fixed-point coordinates where the reference voltage vectors are located, and d1-4 are the duty ratios of the reference voltage vectors.

If the voltage vectors are V1-V4, the corresponding action time is T1-T4, and a sequence of the action time keeps consistent with the sequence of the above reference voltage vectors.

In step 252: the switching pulse sequence of the bridge arms is generated according to the sorted reference voltage vectors and the corresponding action time.

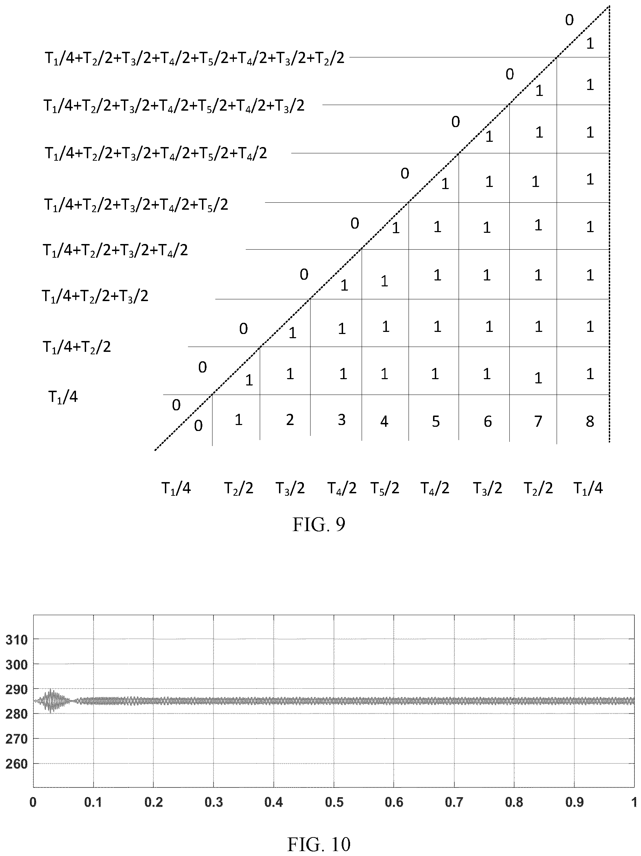

According to the arrangement method of the sorted reference voltage vectors, the action time of the reference voltage vectors is sorted; the sorted action time is allocated in nine segments, the nine-segment allocation being as follows: a first segment, a fifth segment and a ninth segment in nine-segment vectors are allocated in the same time period, the first segment and the ninth segment respectively occupy 1/4, the fifth segment occupies 1/2, and the remaining six segments each occupy 1/2 of the corresponding time period according to symmetry (i.e., $T_{x1}/4$, $T_{x2}/2$, $T_{x3}/2$, $T_{x4}/2$, $T_{x1}/2$, $T_{x4}/2$, $T_{x3}/2$, $T_{X2}/2$, and $T_{x1}/4$); and states of four bridge arms are determined according to the voltage vectors, and corresponding four switching states are allocated for each state to form a pulse sequence. Referring to FIG. 9 for details, FIG. 9 is a schematic diagram of a nine-stage time allocation method provided by the present application.

Conversion of voltage vectors to switching signals: prior to generating driving pulses, the states of the four bridge arms are determined according to the voltage vectors, and then the corresponding four switching states are assigned to each state, which is just 4*4 that can obtain sixteen switching pulse sequences.

Understandably, the nine-segment time allocation method can be used so that a plurality of vectors in the reference voltage vectors have the same action time, thus achieving the dual purposes of controlling the three-level inverter and achieving midpoint potential balance.

Differing from the prior art, the voltage regulation method for the three-phase four-bridge-arm three-level inverter provided by the present embodiment includes: determining a voltage vector corresponding to a three-phase voltage; constructing a controllable spatial polyhedral region on the basis of an abc three-dimensional coordinate system and the voltage vector, the controllable spatial polyhedral region including a plurality of tetrahedral subregions and cubic subregions; positioning preset reference vectors in a plurality of subregions of the controllable spatial polyhedral region, so as to generate reference voltage vectors corresponding to the reference vectors, wherein the reference voltage vectors are used for controlling output states of corresponding four bridge arms; sorting the reference voltage vectors with a modulation strategy in which a zero-level output state is reduced; and generating a switching pulse sequence of the bridge arms according to the sorted reference voltage vectors and a corresponding action time, so as to regulate a midpoint voltage of the three-phase four-bridge-arm three-level inverter. In this way, the present embodiment has the following beneficial effects.

(1) Under the condition of not adding a controller, the balance adjustment of the midpoint voltage of the three-phase four-bridge-arm three-level inverter is realized.

(2) Six imaginary cubes are introduced to ensure that redundant controllable regions of the traditional SVPWM modulation method are reduced while ensuring the position determination of the reference vectors, which simplifies the complexity of the traditional SVPWM modulation method.

(3) The modulation strategy is adopted: with the goal of reducing the midpoint current into each bridge arm, the sequences of the origin reference voltage vectors are changed, so as to counteract a zero-level output state that affects the midpoint voltage balance.

In order to verify the effectiveness of the proposed midpoint voltage balancing method for the three-phase four-bridge-arm three-level inverter, a simulation experiment of space vector modulation of the three-phase four-bridge-arm three-level inverter is built. The inverter parameters are shown in the following table:

| Parameters | Values |
|---|---|
| DC bus: udc | 570V |
| Load voltage: vload | 480V |
| Fundamental frequency: f | 60Hz |
| Switching frequency: fs | 16kHz |
| LC type filter inductor: L | 0.5mH |
| LC type filter capacitor: C | $25\mu tF$ |

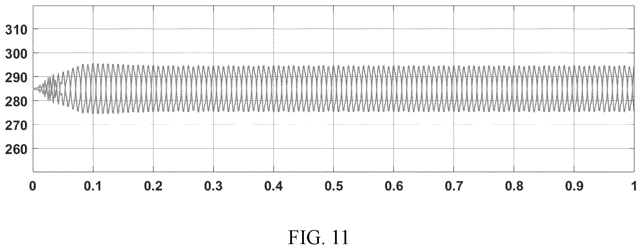

Referring to FIGs. 10 and 11 below, FIG. 10 is a midpoint location diagram under a balanced load condition provided by the present application; and FIG. 11 is a midpoint location diagram under an actual load condition after balance with a voltage regulation method provided by the present application. In the drawings, a horizontal axis is time, and a vertical axis is voltages. The inverter power in FIG. 10 is 5 KW, and the inverter power in FIG. 11 is 100 KW. As can be seen from the drawings, the midpoint voltage balance can be well maintained by the method provided in the present embodiment, and the operation can be seen to be very stable after extending the time axis.

The method provided by the embodiments of the present application is introduced above in detail. Specific examples are used herein to illustrate the principles and embodiments of the present application. The description of the above embodiments is only used to help the understanding of the methods and core ideas of the present application. At the same time, for those skill in the art, according to the ideas of the present application, there will be changes in the specific embodiments and the scope of application. In summary, the content of the present description should not be construed as a limitation of the present application.

**Claims**

**1.** A voltage regulation method for a three-phase four-bridge-arm three-level inverter, comprising:

determining a voltage vector corresponding to a three-phase voltage;
constructing a controllable spatial polyhedral region on the basis of an abc three-dimensional coordinate system and the voltage vector;

positioning preset reference vectors in a plurality of sub-regions of the controllable spatial polyhedral region, so as to generate reference voltage vectors corresponding to the reference vectors, wherein the reference voltage vectors are used for controlling output states of corresponding four bridge arms;

sorting the reference voltage vectors with a modulation strategy in which a zero-level output state is reduced; and generating a switching pulse sequence of the bridge arms according to the sorted reference voltage vectors and a corresponding action time, so as to regulate a midpoint voltage of the three-phase four-bridge-arm three-level inverter.

2. The method according to claim 1, wherein

the determining a voltage vector corresponding to a three-phase voltage comprises:

determining the voltage vector corresponding to the three-phase voltage according to output states of the bridge arms, the output states comprising a high level, a zero level and a low level.

3. The method according to claim 2, wherein

the determining the voltage vector corresponding to the three-phase voltage according to output states of the bridge arms comprises:

determining the voltage vector corresponding to the three-phase voltage according to the following formula:

$$\begin{cases} U_{AN} = \frac{S_a - S_n}{2} U_{dc} \\ U_{BN} = \frac{S_b - S_n}{2} U_{dc}; \\ U_{CN} = \frac{S_c - S_n}{2} U_{dc} \end{cases}$$

in which: $U_{AN}$ represents a voltage vector of an A bridge arm relative to an N bridge arm; $U_{BN}$ represents a voltage vector of a B bridge arm relative to the N bridge arm; $U_{CN}$ represents a voltage vector of a C bridge arm relative to

$$S_{i(i=a、\ b、\ c、\ n)} = \begin{cases} \text{high level} = 1 \\ \text{zero level} = 0 \\ \text{low level} = -1 \end{cases}$$

the N bridge arm; , $S_a$, $S_b$, $S_c$ and $S_n$ are output states of A, B, C and N bridge arms of the three-phase four-bridge-arm three-level inverter respectively; and $U_{dc}$ represents a DC-side power voltage.

4. The method according to claim 1, wherein

the constructing a controllable spatial polyhedral region on the basis of an abc three-dimensional coordinate system and the voltage vector comprises:

standardizing the voltage vectors; and
introducing the standardized voltage vectors into the abc three-dimensional coordinate system to construct the controllable spatial polyhedral region.

5. The method according to claim 4, wherein

the standardizing the voltage vectors comprises:

standardizing the voltage vectors according to the following formula:

$$\begin{cases} U_{AN}^* &= (\frac{S_a - S_n}{2} U_{dc}) \frac{2}{U_{dc}} = S_a - S_n \\ U_{BN}^* &= (\frac{S_b - S_n}{2} U_{dc}) \frac{2}{U_{dc}} = S_b - S_n; \\ U_{CN}^* &= (\frac{S_c - S_n}{2} U_{dc}) \frac{2}{U_{dc}} = S_c - S_n \end{cases}$$

$U_{AN}^*$ represents a standardized voltage vector of the A bridge arm relative to the N bridge arm;

$U_{BN}^*$ represents a standardized voltage vector of the B bridge arm relative to the N bridge arm; and

$U_{CN}^*$ represents a standardized voltage vector of the C bridge arm relative to the N bridge arm.

**6.** The method according to claim 1, wherein
the controllable spatial polyhedral region is a controllable dodecahedral region, the controllable dodecahedral region comprising three cubic regions constructed by standardized voltage vectors and six imagery cubic regions attached to the outer sides of the three cubic regions.

**7.** The method according to claim 1, wherein
the positioning preset reference vectors in a plurality of sub-regions of the controllable spatial polyhedral region, so as to generate reference voltage vectors corresponding to the reference vectors comprises:

positioning the preset reference vectors in the cubic regions of the plurality of sub-regions of the controllable spatial polyhedral region;
positioning the preset reference vectors in tetrahedral regions of the plurality of sub-regions of the controllable spatial polyhedral region; and
generating reference voltage vectors corresponding to the reference vectors according to a final positioning result.

**8.** The method according to claim 7, wherein
the positioning the preset reference vectors in the cubic regions of the plurality of sub-regions of the controllable spatial polyhedral region comprises:

selecting a cube where reference origin coordinates are located from the controllable spatial polyhedral region based on the reference origin coordinates after rounding of the reference vectors, wherein
the reference origin coordinates are:

$$\begin{cases} a = \text{integer}(u_{ran}^*) \\ b = \text{integer}(u_{rbn}^*); \\ c = \text{integer}(u_{rcn}^*) \end{cases}$$

in which: $u_{ran}^*$ represents a-axis coordinates of the reference vector; $u_{rbn}^*$ represents b-axis coordinates of the reference vector; and $u_{rcn}^*$ represents c-axis coordinates of the reference vector.

**9.** The method according to claim 7, wherein
the positioning the preset reference vectors in the tetrahedral regions of the plurality of sub-regions of the controllable spatial polyhedral region comprises:
a positioned target cube is divided by three 45° sections by taking origin coordinates corresponding to the reference vectors as a reference point; distances among the three sections are calculated with the reference origin coordinates as a center to determine a tetrahedron position where the reference vector is located; and the three 45° sections comprise an a-b-axis 45° section, a c-b-axis 45° section and an a-c-axis 45° section that pass through an origin.

**10.** The method according to claim 1, wherein
the sorting the reference voltage vectors with a modulation strategy in which a zero-level output state is reduced comprises:

determining a synthesis sequence of the reference voltage vectors in the controllable spatial polyhedral region; and
adjusting a sequence of the reference voltage vectors with a goal of reducing a midpoint current into each bridge arm.

**11.** The method according to claim 1, wherein
the generating a switching pulse sequence of the bridge arms according to the sorted reference voltage vectors and a corresponding action time comprises:

determining a duty ratio corresponding to the reference voltage vectors according to the following formula:

$$\begin{cases} u^*_{ran} = \bar{S}^1_{an}d_1 + S^2_{an}d_2 + S^3_{an}d_3 + S^4_{an}d_4 \\ u^*_{rbn} = S^1_{bn}d_1 + S^2_{bn}d_2 + S^3_{bn}d_3 + S^4_{bn}d_4 \\ u^*_{rcn} = S^1_{cn}d_1 + S^2_{cn}d_2 + S^3_{cn}d_3 + S^4_{cn}d_4 \\ d_1 + d_2 + d_3 + d_4 = 1 \end{cases},$$

multiplying the duty ratio by a switching period to obtain the action time corresponding to the reference voltage vectors;

in which, $(S^1_{an},S^1_{bn},S^1_{cn})$, $(S^2_{an},S^2_{bn},S^2_{cn})$, $(S^3_{an},S^3_{bn},S^3_{cn})$ and $(S^4_{an},S^4_{bn},S^4_{cn})$ are tetrahedral fixed-point coordinates where the reference voltage vectors are located, and d1-4 are the duty ratios of the reference voltage vectors; and
generating the switching pulse sequence of the bridge arms according to the sorted reference voltage vectors and the corresponding action time.

12. The method according to claim 11, wherein
the generating a switching pulse sequence of the bridge arms according to the sorted reference voltage vectors and a corresponding action time comprises:

sorting the action time of the reference voltage vectors according to an arrangement mode of the sorted reference voltage vectors;
allocating the sorted action time in nine segments, the nine-segment allocation being as follows: a first segment, a fifth segment and a ninth segment in nine-segment vectors are allocated in the same time period, the first segment and the ninth segment respectively occupy 1/4, the fifth segment occupies 1/2, and the remaining six segments each occupy 1/2 of the corresponding time period according to symmetry; and
determining states of four bridge arms according to the voltage vectors, and allocating corresponding four switching states for each state to form a pulse sequence.

FIG. 1

Determining a voltage vector corresponding to a three-phase voltage ⟋ 21

↓

Constructing a controllable spatial polyhedral region on the basis of an abc three-dimensional coordinate system and the voltage vector ⟋ 22

↓

Positioning preset reference vectors in a plurality of sub-regions of the controllable spatial polyhedral region, so as to generate reference voltage vectors corresponding to the reference vectors, wherein the reference voltage vectors are used for controlling output states of corresponding four bridge arms ⟋ 23

↓

Sorting the reference voltage vectors with a modulation policy in which a zero-level output state is reduced ⟋ 24

↓

Generating a switching pulse sequence of the bridge arms according to the sorted reference voltage vectors and a corresponding action time, so as to regulate a midpoint voltage of the three-phase four-bridge-arm three-level inverter ⟋ 25

FIG. 2

Standarizing voltage vectors ⟋ 221

↓

Introducing the standardized voltage vectors into the abc three-dimensional coordinate system to construct the controllable spatial polyhedral region ⟋ 222

FIG. 3

FIG. 4

Positioning the preset reference vectors in the cubic regions of the plurality of subregions of the controllable spatial polyhedral region — 231

Positioning the preset reference vectors in tetrahedral regions of the plurality of sub-regions of the controllable spatial polyhedral region — 232

Generating reference voltage vectors corresponding to the reference vectors according to a final positioning result — 233

FIG. 5

FIG. 6

Standardizing reference
vectors
$(u_{an}、\ u_{bn}、\ u_{cn})$

$a=integer(u_{an})$
$b=integer(u_{bn})$
$c=integer(u_{cn})$

$u_{an}、\ u_{bn}、\ u_{cn}、\ a、\ b、\ c$

Yes                                No

$u_{cn}\text{-}c\geqslant u_{bn}\text{-}b$

Yes                    No                              Yes                            No

$u_{an}\text{-}a\geqslant u_{cn}\text{-}c$                              $u_{cn}\text{-}c\geqslant u_{an}\text{-}a$

Yes                 No                                               Yes                          No

Figure 1                    $u_{an}\text{-}a\geqslant u_{bn}\text{-}b$            Figure 4                    $u_{bn}\text{-}b\geqslant u_{an}\text{-}a$

Figure 2          Figure 3          Figure 5          Figure 6

FIG. 7

Determining action time corresponding to reference
voltage vectors                                                      ⌐251

Generating the switching pulse sequence of the bridge
arms according to the sorted reference voltage vectors
and the corresponding action time                          ⌐252

FIG. 8

$0$

$1$

$T_1/4+T_2/2+T_3/2+T_4/2+T_5/2+T_4/2+T_3/2+T_2/2$

$0$

$1$ $1$

$T_1/4+T_2/2+T_3/2+T_4/2+T_5/2+T_4/2+T_3/2$

$0$

$1$ $1$ $1$

$T_1/4+T_2/2+T_3/2+T_4/2+T_5/2+T_4/2$

$0$

$1$ $1$ $1$ $1$

$T_1/4+T_2/2+T_3/2+T_4/2+T_5/2$

$0$

$1$ $1$ $1$ $1$ $1$

$T_1/4+T_2/2+T_3/2+T_4/2$

$0$

$1$ $1$ $1$ $1$ $1$ $1$

$T_1/4+T_2/2+T_3/2$

$0$

$1$ $1$ $1$ $1$ $1$ $1$ $1$

$T_1/4+T_2/2$

$0$

$1$ $1$ $1$ $1$ $1$ $1$ $1$ $1$

$T_1/4$

$0$

$0$ $1$ $2$ $3$ $4$ $5$ $6$ $7$ $8$

$T_1/4$ $T_2/2$ $T_3/2$ $T_4/2$ $T_5/2$ $T_4/2$ $T_3/2$ $T_2/2$ $T_1/4$

FIG. 9

FIG. 10

FIG. 11

<table>
<tr><td colspan="2"><strong>INTERNATIONAL SEARCH REPORT</strong></td><td>International application No.<br><br>**PCT/CN2023/122773**</td></tr>
</table>

| A. | CLASSIFICATION OF SUBJECT MATTER |
|---|---|

H02M7/487(2007.01)i

According to International Patent Classification (IPC) or to both national classification and IPC

| B. | FIELDS SEARCHED |
|---|---|

Minimum documentation searched (classification system followed by classification symbols)

IPC:H02M

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI; IEEE: 逆变, 电压, 平衡, 电平, 状态, 矢量, 空间, 调节, 调整, invert, voltage, balance, level, state, vector, space, regulate, adjust

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 106385192 A (NORTHEASTERN UNIVERSITY AT QINHUANGDAO) 08 February 2017 (2017-02-08)<br>description, paragraphs 37-101, and figures 1-12 | 1-12 |
| A | CN 101510736 A (NANJING UNIVERSITY OF AERONAUTICS AND ASTRONAUTICS) 19 August 2009 (2009-08-19)<br>description, page 4 line 8-page 9 last line, and figures 1-3 | 1-12 |
| A | CN 102647101 A (DONGFANG HITACHI (CHENGDU) ELECTRICAL CONTROL EQUIPMENT CO., LTD.) 22 August 2012 (2012-08-22)<br>entire document | 1-12 |
| A | CN 103248304 A (HENAN UNIVERSITY OF SCIENCE & TECHNOLOGY) 14 August 2013 (2013-08-14)<br>entire document | 1-12 |
| A | CN 104038091 A (STATE GRID CORP. OF CHINA et al.) 10 September 2014 (2014-09-10)<br>entire document | 1-12 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 December 2023** | **03 January 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/122773** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 109347347 A (NANJING UNIVERSITY OF AERONAUTICS AND ASTRONAUTICS) 15 February 2019 (2019-02-15) entire document | 1-12 |
| A | CN 111293915 A (TIANJIN POLYTECHNIC UNIVERSITY) 16 June 2020 (2020-06-16) entire document | 1-12 |
| A | US 5852558 A (WISCONSIN ALUMNI RESEARCH FOUNDATION) 22 December 1998 (1998-12-22) entire document | 1-12 |

Form PCT/ISA/210 (second sheet) (July 2022)

INTERNATIONAL SEARCH REPORT
Information on patent family members

International application No.

**PCT/CN2023/122773**

| Patent document cited in search report | | | Publication date (day/month/year) | Patent family member(s) | | | Publication date (day/month/year) |
|---|---|---|---|---|---|---|---|
| CN | 106385192 | A | 08 February 2017 | CN | 106385192 | B | 31 March 2020 |
| CN | 101510736 | A | 19 August 2009 | CN | 101510736 | B | 08 December 2010 |
| CN | 102647101 | A | 22 August 2012 | CN | 102647101 | B | 08 July 2015 |
| CN | 103248304 | A | 14 August 2013 | None | | | |
| CN | 104038091 | A | 10 September 2014 | CN | 104038091 | B | 24 May 2017 |
| CN | 109347347 | A | 15 February 2019 | CN | 109347347 | B | 15 May 2020 |
| CN | 111293915 | A | 16 June 2020 | CN | 111293915 | B | 31 March 2023 |
| US | 5852558 | A | 22 December 1998 | None | | | |

Form PCT/ISA/210 (patent family annex) (July 2022)